# EUROPEAN PATENT APPLICATION

(11) **EP 1 936 546 A1**
(43) Date of publication of application: **25.06.2008**
(21) Application number: 05783245.3
(22) Date of filing: 15.09.2005
(51) Int. Cl.: G06Q 10/00, G05B 19/4063

(54) **SLIP PREVENTIVE FOR WAISTCLOTH AND WAISTCLOTH WITH THIS SLIP PREVENTIVE ATTACHED THERETO**

(71) Applicant: Hassho Shoji Co. Ltd., Chuo-ku Osaka-shi Osaka 540-0003 (JP)
(72) Inventor: OGAWA, Takahiro, Osaka-shi, Osaka 5360021 (JP)
(74) Representative: Glawe, Delfs, Moll
(86) International application number: PCT/JP2005/017008
(87) International publication number: WO 2007/032071

(57) **Abstract**

A hot-melt resin layer 3 that does not melt or is hard to melt at a predetermined heating temperature is formed on one surface of a base fabric 1. Then, a plurality of non-slip surfaces 2 and 2 including narrow flat surfaces molded from melted silicone resin are formed on the other surface. Then, a hot-melt resin layer 4 that melts at a predetermined temperature is formed on an outer surface of the hot-melt resin layer 3. The non-slip member is mounted to a band 5 to be attached to the inside of a waist part of trousers or a skirt, and the waist lining A is attached to the inside of the waist part of the trousers or the skirt. The plurality of non-slip surfaces 2 and 2 are arranged in a plurality of rows, thereby allowing extremely satisfactory slip preventing effects to be maintained for a long time as compared with a non-slip member including a plurality of scattering small surfaces of protrusions. Washing or dry-cleaning does not cause the non-slip member to be delaminated.

## Description

### Technical Field

The present invention relates to a non-slip material for a waist lining attached to the inside of a waist part of trousers or a skirt, and a waist lining provided with the non-slip material.

### Background Art

There have been various types of non-slip materials for a waist lining to be attached to the inside of a waist part of trousers or a skirt. For example, the non-slip materials include non-slip members molded from synthetic rubber or polyurethane sewn or bonded to a waist lining part, or yarn made of synthetic rubber or polyurethane formed into a tape, which is attached to trousers or a skirt. The non-slip materials also include silicone rubber transferred to a waist lining part by printing, and heated and cured (for example, see Patent Document 1). Further, there are non-slip materials having a plurality of non-slip protrusions made of silicone rubber placed at predetermined intervals (for example, see Patent Document 2).

Patent Document 1: Japanese Patent Laid-Open No . 60-39403

Patent Document 2: Japanese Utility Model Registration No. 3007977

### Disclosure of the Invention

### Problems to be Solved by the Invention

When a material molded from synthetic rubber or polyurethane is sewn or bonded to a waist lining part, or yarn made of synthetic rubber or polyurethane is formed into a tape, which is attached to trousers or a skirt, sufficient slip preventing effects cannot be obtained.

When silicone rubber is transferred to a waist lining part by printing, and heated and cured, the silicone rubber is transferred to the inside of a waist part of trousers or a skirt by printing, and thus a silicone rubber layer of only about 0.5 mm thick can be formed, thereby reducing a slip preventing function.

On the other hand, non-slip materials having a plurality of non-slip protrusions made of silicone rubber placed at predetermined intervals can eliminate the above described problems, and the present invention has a first obj ect to obtain a novel non-slip material for a waist lining having a new form replacing the protrusions. The present invention has another object to prevent a non-slip member from being delaminated from a base fabric. The present invention has a further obj ect to provide a waist lining that provides extremely satis factory non-slip effects.

### Means for Solving the Problems

In order to achieve the first object, in the present invention, a plurality of non-slip surfaces 2 and 2 including narrow flat surfaces molded from melted silicone resin are formed on one surface of a square or rectangular base fabric 1 made of a woven fabric, a knitted fabric or a nonwoven fabric, in a plurality of rows in directions other than vertical and horizontal directions with respect to the base fabric 1.
The plurality of non-slip surfaces 2 and 2 including the narrow flat surfaces have at least larger bulges than non-slip surfaces transferred by printing. Further, the plurality of non-slip surfaces 2 and 2 including the narrow flat surfaces are arranged in the plurality of rows in the directions other than vertical and horizontal directions with respect to the base fabric 1, thereby significantly improving a slip preventing function as compared with a non-slip member including a plurality of scattering small surfaces of protrusions.

The base fabric 1 formed with the plurality of non-slip surfaces 2 and 2 in the plurality of rows is mounted to a band 5 to be attached to the inside of a waist part of trousers or a skirt, and the waist lining A is attached to the inside of the waist part of the trousers or the skirt. This provides comfortable fit of trousers or a skirt, and prevents a shirt or a blouse from riding up.

It is preferable that a hot-melt resin layer 3 that does not melt or is hard to melt at a predetermined heating temperature is formed on one surface of the base fabric 1, then the plurality of non-slip surfaces 2 and 2 including the narrow flat surfaces molded from the melted silicone resin are formed on the other surface, and then a hot-melt resin layer 4 that melts at a predetermined temperature is formed on an outer surface of the hot-melt resin layer 3.

In this case, melted hot-melt resin to form the hot-melt resin layer 3 permeates texture of the base fabric 1, thereby increasing adhesion of the hot-melt resin layer 3 to the base fabric 1. The presence of the resin layer 3 increases adhesion of the hot-melt resin layer 4 placed on the outer surface thereof to the base fabric 1, and also causes the hot-melt resin layer 4 to be firmly bonded to the hot-melt resin layer 3 to increase adhesion to each other, thereby preventing the hot-melt resin layer 4 from being delaminated from the base fabric 1.

On the other hand, after the hot-melt resin layer 3 is formed, the plurality of non-slip surfaces 2 and 2 including the narrow flat surfaces are formed on the surface without the layer 3 by molding the melted silicone resin on the base fabric 1. At this time, the melted silicone resin permeates the texture of the base fabric 1 made of a woven fabric, a knitted fabric or a nonwoven fabric, and the melted silicone resin having permeated the texture of the base fabric 1 cooperates with the hot-melt resin layer 3 on the back side to increase adhesion of the plurality of non-slip surfaces 2 and 2 including the narrow flat surfaces of silicone resin to the base fabric 1.

For the plurality of non-slip surfaces 2 and 2 including the narrow flat surfaces in the non-slip material according to the present invention, the melted silicone resin permeates the texture of the base fabric 1 made of a woven fabric, a knitted fabric or a nonwoven fabric, and cooperates with the hot-melt resin layer 3 on the back side to be firmly bonded to the base fabric 1. Thus, the non-slip material B is attached to the inside of a waist part of trousers or a skirt or a waist lining mounted to this part, thereby allowing extremely satisfactory slip preventing effects to be maintained for a long time. Further, washing or dry-cleaning does not cause the non-slip member to be delaminated.

The hot-melt resin layer 3 is previously formed on one surface of the base fabric 1, and thus when the melted silicone resin is molded on the base fabric 1 to form the plurality of non-slip surfaces 2 and 2 including the narrow flat surfaces, the melted resin does not permeate the texture of the base fabric 1 and seep from the back side.

A woven fabric, a knitted fabric or a nonwoven fabric having at least a napped front surface is preferably used as the base fabric 1. With such a fabric, the melted silicone resin to form the plurality of non-slip surfaces 2 and 2 including the narrow flat surfaces permeates the texture of the base fabric 1 made of a woven fabric, a knitted fabric or a nonwoven fabric and retains the napped part of the base fabric 1, thereby further increasing the adhesion of the hot-melt resin layer 3 to the base fabric 1 and the adhesion of the plurality of non-slip surfaces 2 and 2 including the narrow flat surfaces to the base fabric 1. This further prevents the hot-melt resin layer 4 and the plurality of non-slip surfaces 2 and 2 including the narrow flat surfaces from being delaminated from the base fabric 1.

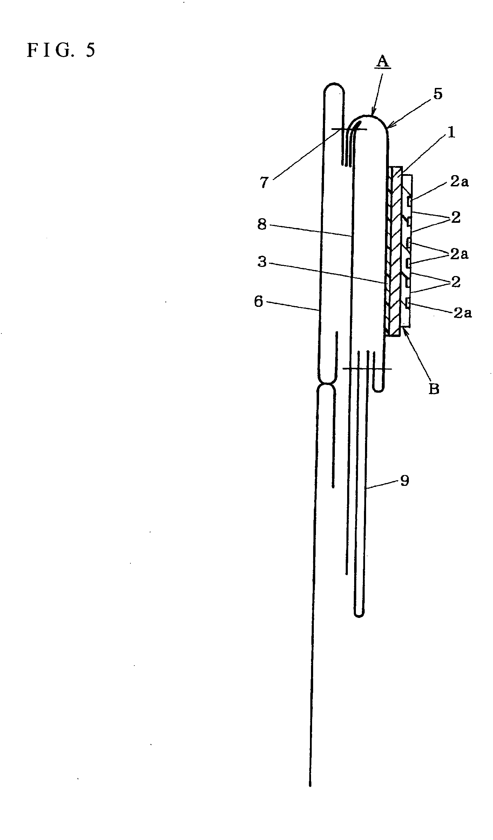

The base fabric 1 on which the plurality of non-slip surfaces 2 and 2 including the narrow flat surfaces molded from the melted silicone resin are formed in the plurality of rows in the directions other than vertical and horizontal directions with respect to the base fabric 1 is mounted to the band 5 to be attached to the inside of the waist part of trousers or a skirt. In this way, one waist lining A can be formed, and when the waist lining A is attached to the inside of the waist part of trousers or a skirt as shown in Figure 5, extremely satisfactory slip preventing effects can be obtained.

### Advantages of the Invention

For the non-slip material for a waist lining according to claim 1, the plurality of non-slip surfaces 2 and 2 including the narrow flat surfaces and having at least larger bulges than non-slip surfaces transferred by printing are arranged in the plurality of rows in the directions other than vertical and horizontal directions with respect to the base fabric 1, thereby significantly improving a slip preventing function as compared with a non-slip member including a plurality of scattering small surfaces of protrusions. Then, the non-slip material B is mounted to the band 5 to be attached to the inside of the waist part of trousers or a skirt, and the waist lining A is attached to the inside of the waist part of the trousers or the skirt. This provides comfortable fit of trousers or a skirt, and prevents a shirt or a blouse from riding up.

When the non-slip material for a waist lining according to claim 2 is used, extremely satisfactory slip preventing effects can be maintained for a long time, and further, washing or dry-cleaning does not cause the non-slip member to be delaminated.

When the non-slip material for a waist lining according to claim 3 is used, the adhesion of the hot-melt resin layer 3 to the base fabric 1 and the adhesion of the plurality of non-slip surfaces 2 and 2 including the narrow flat surfaces to the base fabric 1 are further increased, extremely satisfactory slip preventing effects can be maintained for a long time, and further, washing or dry-cleaning does not cause the non-slip member to be delaminated.

When the waist lining according to claim 4 is attached to the inside of the waist part of trousers or a skirt, extremely satisfactory slip preventing effects can be obtained.

### Brief Description of the Drawings

Figure 1 is an enlarged schematic side view of an example of a non-slip material for a waist lining according to the present invention;
Figure 2 is an enlarged schematic sectional view of an example of a manufacturing method of the non-slip material in the order of steps, (a) shows a base fabric only, (b) shows one hot-melt resin layer being formed on one surface of the base fabric, (c) shows a plurality of non-slip surfaces including narrow flat surfaces molded from melted silicone resin being formed on the other surface, and (d) shows a further hot-melt resin layer being formed on an outer surface of the hot-melt resin layer;

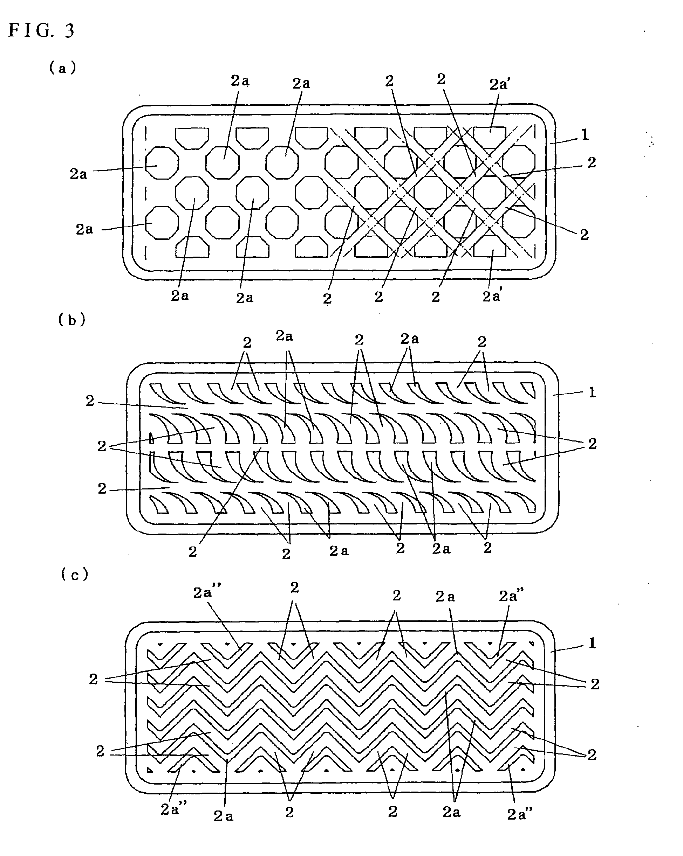

Figure 3 is an enlarged plan view of an example of a plurality of non-slip surfaces including narrow flat surfaces molded from melted silicone resin, (a) shows a plurality of regular octagonal recesses being arranged vertically and horizontally at regular intervals, and parts between the recesses being the plurality of non-slip surfaces including the narrow flat surfaces, (b) shows a plurality of diagonally curved recesses being arranged vertically and horizontally at regular intervals, and parts between the recesses being the plurality of non-slip surfaces including the narrow flat surfaces, and (c) shows V-shaped continuous recesses being arranged at regular intervals in a plurality of vertical rows, and parts between the recesses being the plurality of non-slip surfaces including the narrow flat surfaces;
Figure 4 is a partial front view of an example of the non-slip material in Figure 1 and Figure 2 (d) being applied to a waist lining;
Figure 5 is an enlarged sectional view of the waist lining in Figure 4 being attached to the inside of a waist part of trousers or a skirt; and
Figure 6 is an enlarged sectional view of the non-slip material in Figure 1 and Figure 2 (d) being directly attached to apart corresponding to the inside of a waist part of trousers or a skirt.

### Description of Symbols

1 ... base fabric, 2 ... non-slip surface, 2a, 2a', 2a" ... recess, 3, 4 ... hot-melt resin layer, 5 ... band, A ... waist lining, B ... non-slip material.

### Best Mode for Carrying out the Invention

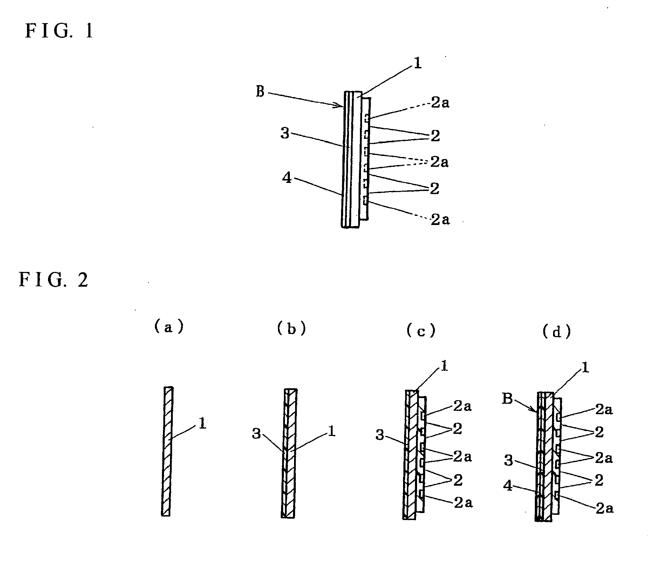

An example of a non-slip material for a waist lining and a waist lining provided with the non-slip material according to the present invention will be described in detail with reference to the drawings.
As shown in Figure 1 and Figures 2 (b) to (d), a hot-melt resin layer 3 is formed on one surface (a left surface in each figure) of a base fabric 1. The base fabric 1 is made of a woven fabric, a knitted fabric or a nonwoven fabric. Hot-melt resin that forms the hot-melt resin layer 3 does not melt or is hard to melt with heat at a predetermined temperature, that is, heat generated by heating a non-slip member with an iron, a press or other devices.

On one surface (a right surface in Figure 1 and Figures 2(c) and (d)) of the base fabric 1 opposite to the surface formed with the hot-melt resin layer 3, a plurality of non-slip surfaces 2 and 2 including narrow flat surfaces are formed by molding melted silicone resin.
Silicone is a polymer containing silicon with organic acid bonded by siloxane bond (Si-O-Si), and can be artificially synthesized. The properties of the silicone are classified into three basic forms; rubber, oil, and resin, and the form of rubber (liquid rubber) is herein used.

In particular, the liquid silicone rubber can be easily formed into a rubber elastic body and easily processed, and thus used in various fields. The liquid silicone rubber is herein used as a material for a non-slip material for a waist lining, and melted liquid silicone rubber is molded to form the plurality of non-slip surfaces 2 and 2 including the narrow flat surfaces. The plurality of non-slip surfaces 2 and 2 are arranged in a plurality of rows in directions other than vertical and horizontal directions with respect to the base fabric 1, thereby significantly improving a slip preventing function as compared with a non-slip member including a plurality of scattering small surfaces of protrusions.

The non-slip surfaces 2 and 2 may have various forms. For example, as shown in Figure 3(a), a plurality of regular octagonal recesses 2a and 2a may be arranged vertically and horizontally at regular intervals, and parts between the recesses may be the plurality of non-slip surfaces 2 and 2 including the narrow flat surfaces. The plurality of non-slip surfaces 2 and 2 are formed in a plurality of rows in directions other than vertical and horizontal directions with respect to the base fabric 1. In Figure 3(a), as shown by a dash-single-dot line in the right half thereof, the plurality of non-slip surfaces 2 and 2 are diagonally crossed. Recesses 2a' and 2a' positioned in upper and lower ends only have half the shape and size of a regular octagon.

The non-slip surfaces 2 and 2 may have forms shown in Figure 3(b) or Figure 3(c). In these cases, the plurality of non-slip surfaces 2 and 2 including the narrow flat surfaces are formed in a plurality of rows in directions other than vertical and horizontal directions with respect to the base fabric 1. In Figure 3 (b), diagonally curved recesses 2a and 2a are arranged vertically and horizontally at regular intervals, and parts between the recesses are the plurality of non-slip surfaces 2 and 2 including the narrow flat surfaces.
Thepluralityof non-slip surfaces 2 and 2 are diagonally curved, and partially horizontal narrow non-slip surfaces 2 and 2 are formed between the curved surfaces.

In Figure 3(c), V-shaped continuous recesses 2a and 2a are arranged at regular intervals in a plurality of vertical rows, and parts between the recesses are the plurality of non-slip surfaces 2 and 2 including the narrow flat surfaces. Thus, the plurality of non-slip surfaces 2 and 2 are laterally continuously formed in the plurality of vertical rows, and the narrow non-slip surfaces 2 and 2 are diagonally opposite to each other. The recesses 2a" and 2a" positioned in upper and lower ends only have a V-shape and an inverted V-shape.

The forms of the plurality of non-slip surfaces 2 and 2 including the narrow flat surface are not limited to those in Figure 3 (a) to Figure 3 (c). Specifically, the directions of the non-slip surfaces 2 and 2 are not limited as long as they are formed in a plurality of rows in directions other than vertical and horizontal directions with respect to the base fabric 1, and the forms thereof are not limited.

In the figures, the non-slip material is shown in an enlarged manner, but it is preferable that the size of the base fabric 1 is, for example, about 18 mm length and 45 mm width, and the size of the non-slip member of silicone resin bonded to one surface of the base fabric 1 is, for example, about 16 mm length and 43 mm width. It is also preferable that the entire thickness of the non-slip material is about 1.5 mm. However, the size of the base fabric 1 or the non-slip member of silicone resin bonded to one surface of the base fabric 1 may be freely increased or decreased to a certain extent, and the thickness of the entire non-slip material may be freely increased or decreased to a certain extent.

As described above, after the hot-melt resin layer 3 is formed, the plurality of non-slip surfaces 2 and 2 including the narrow flat surfaces are formed on the surface without the layer 3 by molding the melted silicone resin on the base fabric 1. At this time, the melted silicone resin permeates texture of the base fabric 1 made of a woven fabric, a knitted fabric or a nonwoven fabric, and the melted silicone resin having permeated the texture of the base fabric 1 cooperates with the hot-melt resin layer 3 on the back side to increase adhesion of thepluralityof non-slip surfaces 2 and 2 including the narrow flat surfaces of silicone resin to the base fabric 1.

After the plurality of non-slip surfaces 2 and 2 including the narrow flat surfaces are formed, as shown in Figure 2 (d), a hot-melt resin layer 4 that melts with heat at a predetermined temperature, that is, heat generated by heating the non-slip material B with an iron, a press or other devices is formed on an outer surface of the hot-melt resin layer 3. Describing the forms of the two layers 3 and 4 made of hot-melt resin inmore detail, on one surface of the base fabric 1, the hot-melt resin layer 3 that does not melt or is hard to melt with heat at a predetermined temperature, that is, heat generated by heating the non-slip material B with an iron, a press or other devices is formed closer to the base fabric 1, and the hot-melt resin layer 4 that melts with heat at a predetermined temperature, that is, heat generated by heating the non-slip material B with an iron, a press or other devices is formed on the outer surface of the hot-melt resin layer 3 remote from the base fabric 1.

The hot-melt resin layer 3 can be extremely easily formed by simply laminating a hot-melt resin film on one surface of the base fabric 1 made of a woven fabric, a knitted fabric or a nonwoven fabric. The hot-melt resin layer 4 can be extremely easily formed by simply laminating a hot-melt resin film on the hot-melt resin layer 3.

The temperature at which the non-slip material B melts when heated by an iron, a press or other devices, that is, a melting temperature of the hot-melt resin layer 4 can be set to, for example, 90°C to 100°C. On the other hand, the temperature at which the non-slip material B does not melt or is hard to melt when heated at that temperature (90°C to 100°C), that is, a melting temperature of the hot-melt resin layer 3 may be set to, for example, 120°C to 150°C. Selecting two kinds of hot-melt resins according to melting temperatures allows the set temperatures to be changed.

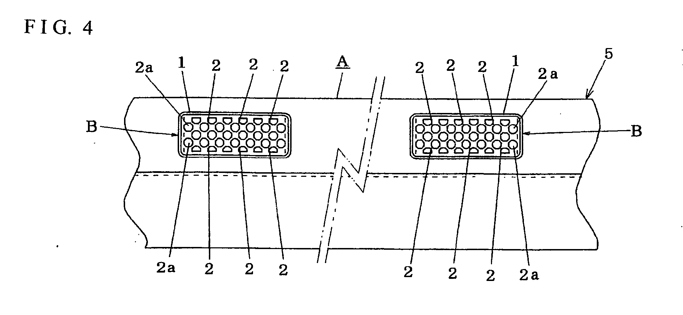

When the non-slip material B is heated to 90°C to 100°C by an iron, a press or other devices, the hot-melt resin layer 4 melts to form a hot-melt layer, and for example, as shown in Figure 4, the non-slip material B having the plurality of non-slip surfaces 2 and 2 including the narrow flat surfaces may be extremely easily bonded to a band 5 to be attached to the inside of a waist part of trousers or a skirt. This band-like material is referred to as a waist lining, and denoted by reference numeral A in Figure 4 and Figure 5.
On the other hand, the hot-melt resin layer 3 does not melt or is hard to melt at the above described temperature (90°C to 100°C), and is maintained at least in a layer state.

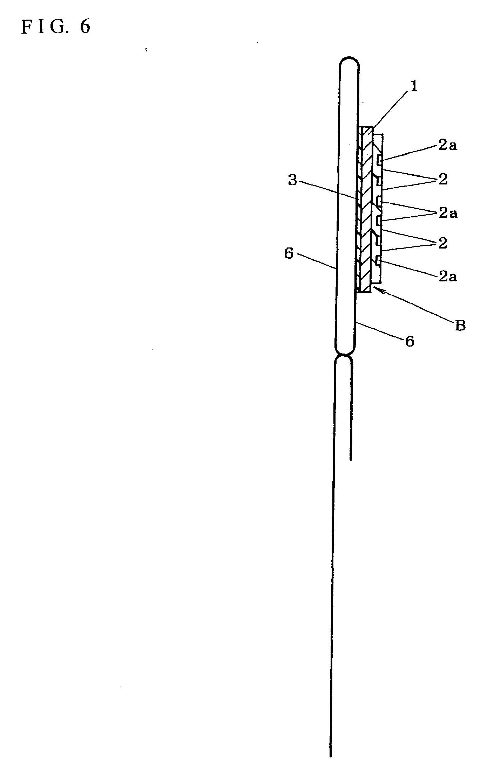

The waist lining A is attached to the inside of the waist part of trousers or a skirt as shown in Figure 5. In Figure 5, the waist lining A is attached by sewing 7 to a part corresponding to the inside of the waist part on the back side of an outer fabric 6 of trousers or a skirt. In Figure 5, reference numeral 8 denotes an interfacing and reference numeral 9 denotes a bias fabric.
The non-slip material B having the plurality of non-slip surfaces 2 and 2 including the narrow flat surfaces by molding the silicone resin on the base fabric 1 is mounted to the band 5 to be attached to the inside of the waist part of trousers or a skirt. Thus, one waist lining A can be formed, and when the waist lining A is attached to the inside of the waist part of trousers or a skirt as shown in Figure 5, extremely satisfactory slip preventing effects can be obtained. The waist lining A may be directly attached to the part corresponding to the inside of the waist part on the back side of the outer fabric 6 of trousers or a skirt as shown in Figure 6, and also in this case, extremely satisfactory slip preventing effects can be obtained.

When the melted silicone resin is molded on the base fabric 1, generally, primer as filler is applied on one surface of the base fabric 1, thereby increasing adhesion of the silicone resin to the base fabric 1 (for example, see Japanese Patent Laid-Open No. 10-317218). However, various resin oligomers or solvents are mixed in the primer together with a silane coupling agent, and the primer is relatively expensive. Thus, the hot-melt resin is herein used instead of the primer and the layer 3 is formed of this resin.

For the plurality of non-slip surfaces 2 and 2 including the narrow flat surfaces by molding the silicone resin, the melted silicone resin permeates the texture of the base fabric 1 made of a woven fabric, a knitted fabric or a nonwoven fabric, and cooperates with the hot-melt resin layer 3 on the back side to be firmly bonded to the base fabric 1. Thus, the non-slip material B is mounted to the band 5 to be attached to the inside of the waist part of trousers or a skirt as shown in Figure 5 and the waist lining A is attached to the inside of the waist part of the trousers or the skirt, or the non-slip material B is directly attached to the part corresponding to the inside of the waist part of trousers or a skirt as shown in Figure 6, thereby allowing extremely satisfactory slip preventing effects to be maintained for a long time. Further, washing or dry-cleaning does not cause the non-slip member to be delaminated.

When the melted silicone resin is thus molded on the base fabric 1, for example, the technique in Japanese Patent No. 3417836 can be applied. Specifically, the hot-melt resin layer 3 is previously formed on one surface of the base fabric 1, and then the melted silicone resin is molded on the other surface. This allows the plurality of non-slip surfaces 2 and 2 including the narrow flat surfaces to be extremely easily formed, and increases adhesion of the plurality of non-slip surfaces 2 and 2 including the narrow flat surfaces of silicone resin to the base fabric 1.
The hot-melt resin layer 3 is previously formed on one surface of the base fabric 1, and thus when the melted silicone resin is molded on the base fabric 1 to form the plurality of non-slip surfaces 2 and 2 including the narrow flat surfaces, the melted resin does not permeate the texture of the base fabric 1 and seep from the back side.

At least a front surface, that is, a surface to which the melted silicone resin is bonded to form the plurality of non-slip surfaces 2 and 2 including the narrow flat surfaces, of a woven fabric, a knitted fabric or a nonwoven fabric that forms the base fabric 1 is preferably napped.
With such a base fabric 1, the melted silicone resin to form the plurality of non-slip surfaces 2 and 2 including the narrow flat surfaces permeates the texture of the base fabric 1 made of a woven fabric, a knitted fabric or a nonwoven fabric and retains the nappedpart of the base fabric 1, thereby further increasing the adhesion of the hot-melt resin layer 3 to the base fabric 1 and the adhesion of the plurality of non-slip surfaces 2 and 2 including the narrow flat surfaces to the base fabric 1. This further prevents the hot-melt resin layer 4 and the plurality of non-slip surfaces 2 and 2 including the narrow flat surfaces from being delaminated from the base fabric 1.

Conventional non-slip members made of rubber or vinyl are not breathable, thus it is difficult to apply steam or heat to the members to be bonded to the inside of the waist part of trousers or a skirt, and supplementary work such as sewing a periphery is necessary. With the non-slip material herein exemplified, however, the non-slip material can be easily bonded to the inside of the waist part of trousers or a skirt simply by applying heat from a front side of the base fabric1. Further, thenon-slipmaterial can be also extremely firmly bonded, and washing or dry-cleaning does not cause the non-slip member to be delaminated.

## Claims

1. A non-slip material for a waist lining, **characterized in that** a plurality of non-slip surfaces 2 and 2 including narrow flat surfaces molded from melted silicone resin are formed on one surface of a square or rectangular base fabric 1 made of a woven fabric, a knitted fabric or a nonwoven fabric, in a plurality of rows in directions other than vertical and horizontal directions with respect to said base fabric 1.

2. The non-slip material for a waist lining according to claim 1, **characterized in that** a hot-melt resin layer 3 that does not melt or is hard to melt at a predetermined heating temperature is formed on one surface of the base fabric 1, then the plurality of non-slip surfaces 2 and 2 including the narrow flat surfaces molded from the melted silicone resin are formed on the other surface, and then a hot-melt resin layer 4 that melts at a predetermined temperature is formed on an outer surface of said hot-melt resin layer 3.

3. The non-slip material for a waist lining according to claim 1, **characterized in that** at least a front surface of the woven fabric, the knitted fabric or the nonwoven fabric is napped.

4. A waist lining, **characterized in that** the base fabric 1 on which the plurality of non-slip surfaces 2 and 2 including the narrow flat surfaces molded from the melted silicone resin are formed in the plurality of rows in the directions other than vertical and horizontal directions with respect to said base fabric 1 is mounted to a band 5 to be attached to the inside of a waist part of trousers or a skirt.

## Amended claims

### Amended claims under Art. 19.1 PCT

1. (Amended) A non-slip material for a waist lining, **characterized in that** a plurality of non-slip surfaces 2 and 2 including narrow flat surfaces molded from melted silicone resin are formed on one surface of a square or rectangular base fabric 1 made of a woven fabric, a knitted fabric or a nonwoven fabric, in a plurality of rows so as to cross each other diagonally to the upper right and the lower right in directions other than vertical and horizontal directions with respect to said base fabric 1.

2. The non-slip material for a waist lining according to claim 1, **characterized in that** a hot-melt resin layer 3 that does not melt or is hard to melt at a predetermined heating temperature is formed on one surface of the base fabric 1, then the plurality of non-slip surfaces 2 and 2 including the narrow flat surfaces molded from the melted silicone resin are formed on the other surface, and then a hot-melt resin layer 4 that melts at a predetermined temperature is formed on an outer surface of said hot-melt resin layer 3.

3. The non-slip material for a waist lining according to claim 1, **characterized in that** at least a front surface of the woven fabric, the knitted fabric or the nonwoven fabric is napped.

4. (Amended) A waist lining, **characterized in that** the base fabric 1 on which the plurality of non-slip surfaces 2 and 2 including the narrow flat surfaces molded from the melted silicone resin are formed in the plurality of rows so as to cross each other diagonally to the upper right and the lower right in the directions other than vertical and horizontal directions with respect to said base fabric 1 is mounted to a band 5 to be attached to the inside of a waist part of trousers or a skirt.
